# EUROPÄISCHE PATENTANMELDUNG

(11) **EP 4 759 692 A1**
(43) Veröffentlichungstag der Anmeldung: **17.06.2026**
(21) Anmeldenummer: 25220304.7
(22) Anmeldetag: 03.12.2025
(51) Int. Cl.: B62H 5/00, B62M 6/45, B62M 6/90

(54) **VERFAHREN ZUM BETREIBEN EINES ELEKTROFAHRRADS**

(30) Priorität: 11.12.2024 DE 102024211800
(71) Anmelder: Robert Bosch GmbH, 70442 Stuttgart (DE)
(72) Erfinder: Schulz, Thilo, 73230 Kirchheim (DE); Kehrer, Stefan, 72127 Kusterdingen (DE); Kuhlmann, Tobias, 70195 Stuttgart (DE); Hastall, Andreas, 70619 Stuttgart (DE); Ercikdi, Sueleyman, 72131 Ofterdingen (DE); Hennig, Julien, 72119 Ammerbuch (DE); Held, Jochen, 71088 Holzgerlingen (DE); Wendel, Viktor, 97688 Bad Kissingen (DE)

(57) **Zusammenfassung**

Die vorliegende Erfindung betrifft ein Verfahren zum Betreiben eines Elektrofahrrads, welches ein Fahrzeugsystem mit einer zentralen Steuereinheit und mit mehreren Fahrradkomponenten umfasst, wobei jede Fahrradkomponente eine Komponentensteuereinheit umfasst, und wobei das Verfahren die Schritte umfasst: Erkennen eines Verbindungszustands der Fahrradkomponenten mit dem Fahrzeugsystem, Austauschen von Schlüsselinformationen zwischen den Fahrradkomponenten und dem Fahrzeugsystem im erkannten verbundenen Zustand, Überprüfen von Kompatibilitäten der ausgetauschten Schlüsselinformationen durch die zentrale Steuereinheit und durch die Komponentensteuereinheiten, und Sperren oder Freigeben des Fahrzeugsystems im Ansprechen auf ein Erkennen von zumindest einer Inkompatibilität der ausgetauschten Schlüsselinformationen.

## Beschreibung

### Stand der Technik

Die vorliegende Erfindung betrifft ein Verfahren zum Betreiben eines Elektrofahrrads, und ein Elektrofahrrad.

Bekannt sind Elektrofahrräder, welche eine Antriebseinheit aufweisen, die von einer Steuereinheit betätigt wird. Bekannt ist dabei auch, dass ein Betrieb der Antriebseinheit gesperrt werden kann, solange kein berechtigter Nutzer mittels eines beispielsweise analogen oder digitalen Schlüssels das System entsperrt. Beispielsweise kann das Entsperren mittels eines Nutzergeräts des Nutzers oder dergleichen erfolgen.

### Offenbarung der Erfindung

Das erfindungsgemäße Verfahren mit den Merkmalen des Anspruchs 1 zeichnet sich demgegenüber dadurch aus, dass ein besonders einfacher und effektiver Betrieb des Elektrofahrrads mit hohem Diebstahlschutz bereitgestellt werden kann. Insbesondere können dabei auch Fahrradkomponenten besonders zuverlässig vor Diebstahl oder missbräuchlicher Verwendung geschützt werden. Dies wird erfindungsgemäß erreicht durch ein Verfahren zum Betreiben eines Elektrofahrrads, wobei das Elektrofahrrad ein Fahrzeugsystem mit einer zentralen Steuereinheit und mit mehreren Fahrradkomponenten umfasst. Jede der Fahrradkomponenten weist dabei eine separate Komponentensteuereinheit auf. Insbesondere kann die Komponentensteuereinheit ein Mikrocontroller sein. Das Verfahren umfasst dabei die Schritte:
- Erkennen eines Verbindungszustands der Fahrradkomponenten mit dem Fahrzeugsystem,
- Austauschen von Schlüsselinformationen zwischen den Fahrradkomponenten und dem Fahrzeugsystem im erkannten verbundenen Zustand,
- Überprüfen von Kompatibilitäten der ausgetauschten Schlüsselinformationen durch die zentrale Steuereinheit und durch die Komponentensteuereinheiten, und
- Sperren oder Freigeben des Fahrzeugsystems im Ansprechen auf ein Erkennen von zumindest einer Inkompatibilität der ausgetauschten Schlüsselinformationen.

Als Verbindungszustand wird insbesondere ein Zustand einer mechanischen und/oder digitalen Verbindung der Fahrradkomponente mit dem Fahrzeugsystem angesehen. Das heißt, es kann der Zustand einer mechanischen Schnittstelle und/oder einer elektrischen Schnittstelle zwischen Fahrradkomponente und Fahrzeugsystem als Verbindungszustand angesehen werden. Der Verbindungszustand kann insbesondere einen unverbundenen Zustand und einen verbundenen Zustand aufweisen.

Als Schlüsselinformationen können insbesondere individuelle Daten angesehen werden, welche Fahrradkomponente bzw. Fahrzeugsystem eindeutig charakterisieren. Insbesondere können die Schlüsselinformationen gesichert oder verschlüsselt bereitgestellt werden.

Insbesondere kann jede Schlüsselinformation eine Information über den aktuellen Zustand der jeweiligen Fahrradkomponente aufweisen. Bevorzugt umfasst jede Schlüsselinformation eine Information über einen gesperrten Zustand oder über einen freigegebenen Zustand der jeweiligen Fahrradkomponente.

Als Kompatibilitäten werden vorzugsweise eine Eignung der jeweiligen Schlüsselinformationen für das entsprechende Fahrzeugsystem überprüft. Insbesondere kann dabei der gesperrte bzw. freigegebene Zustand der jeweiligen Fahrradkomponente überprüft werden. Alternativ oder zusätzlich bevorzugt können individuelle Identifikationsparameter der Schlüsselinformationen abgeglichen werden.

Bevorzugt erfolgt dabei ein Sperren des Fahrzeugsystems, wenn zumindest eine Inkompatibilität der überprüften Schlüsselinformationen sämtlicher Fahrradkomponenten erkannt wird. Alternativ, wenn eine Kompatibilität sämtlicher Schlüsselinformationen von allen Fahrradkomponenten erkannt wurde, wird das Fahrzeugsystem freigegeben. Als Freigeben wird insbesondere ein Versetzen des Fahrzeugsystems in einen betriebsbereiten Zustand angesehen.

Mit anderen Worten werden bei dem Verfahren mehrere mit dem Fahrzeugsystem verbundene Fahrradkomponenten auf dessen Kompatibilität hin überprüft und das gesamte Fahrzeugsystem gesperrt, wenn mindestens eine Inkompatibilität erkannt wurde. Das heißt, wenn mindestens eine der Fahrradkomponenten ungeeignet für das momentane Fahrzeugsystem ist, wird das gesamte Fahrzeugsystem gesperrt.

Das Verfahren bietet somit den Vorteil, dass auf einfache und zuverlässige Weise ein besonders hoher Diebstahlschutz für die Fahrradkomponenten und das Elektrofahrrad bereitgestellt werden kann. Das heißt, wenn beispielsweise eine vorbestimmte gesperrte Fahrradkomponente mit dem Fahrzeugsystem verbunden wird, ist das Fahrzeugsystem gesperrt, insbesondere zumindest so lange, bis die gesperrte Komponente wieder vom Fahrzeugsystem entfernt wird. Dadurch kann auf einfache und effektive Weise und mit einem hohen Nutzerkomfort vermieden werden, dass von einem Elektrofahrrad lösbare Fahrradkomponenten demontiert und beispielsweise an einem anderen Elektrofahrrad oder zu einem anderen Einsatzzweck verwendet werden.

Die Unteransprüche haben bevorzugte Weiterbildungen der Erfindung zum Inhalt.

Bevorzugt umfasst das Verfahren ferner den Schritt: Sperren einer Fahrradkomponente im Ansprechen auf ein Erkennen eines unverbundenen Zustands dieser Fahrradkomponente. Das heißt, wenn eine Fahrradkomponente von dem Fahrzeugsystem entfernt wird, das heißt beispielsweise eine mechanische und/oder elektrische Verbindung getrennt wird, wird diese Fahrradkomponente automatisch in einen gesperrten Zustand versetzt. Das Sperren erfolgt dabei vorzugsweise durch die Komponentensteuereinheit der Fahrradkomponente. Alternativ bevorzugt kann das Sperren auch durch die zentrale Steuereinheit des Fahrzeugsystems erfolgen. Dadurch kann besonders einfach und direkt der weitere Betrieb der Fahrradkomponente verhindert werden, wenn diese vom Fahrzeugsystem entfernt wird. Beispielsweise kann ein Freigeben der Fahrradkomponente erfolgen, wenn ein erneuter verbundener Zustand erkannt wird und die Kompatibilität mit dem entsprechend verbundenen Fahrzeugsystem erkannt wird.

Besonders bevorzugt umfasst das Sperren des Fahrzeugsystems ein gesteuertes Verhindern eines Betriebs einer Antriebseinheit des Elektrofahrrads. Insbesondere erfolgt das Verhindern des Betriebs der Antriebseinheit gesteuert mittels der zentralen Steuereinheit, bevorzugt indem eine Stromversorgung der Steuereinheit durch eine Batterie des Elektrofahrrads gezielt verhindert wird. Das heißt, das Sperren des Fahrzeugsystems blockiert gezielt eine Motorunterstützung durch die Antriebseinheit. Alternativ oder zusätzlich bevorzugt umfasst das Freigeben des Fahrzeugsystems ein gesteuertes Versetzen der Antriebseinheit des Elektrofahrrads in einen betriebsbereiten Zustand. Bevorzugt werden zudem sämtliche Fahrradkomponenten ebenfalls in einen betriebsbereiten Zustand versetzt. Als betriebsbereiter Zustand wird insbesondere angesehen, dass eine Stromversorgung der Antriebseinheit durch die Batterie ermöglicht wird. Das heißt, eine Motorunterstützung wird freigegeben. Das Freigeben der Fahrradkomponenten kann bevorzugt durch Kommunikation der zentralen Steuereinheit mit jeder der Komponentensteuereinheiten erfolgen. Damit kann besonders einfach und zuverlässig bei nichtautorisiertem Betrieb von zumindest Teilen des Fahrzeugsystems die Nutzung des Elektrofahrrads mit Motorunterstützung verhindert werden oder alternativ freigegeben werden bei autorisierter Nutzung sämtlicher Fahrradkomponenten.

Vorzugsweise wird das Verfahren bei jedem Betriebsstart des Fahrzeugsystems durchgeführt. Das heißt, bei jeder Inbetriebnahme des Fahrzeugsystems wird die Kompatibilität sämtlicher Fahrradkomponenten und damit die autorisierte Nutzung überprüft und das Fahrzeugsystem entsprechend freigegeben oder gesperrt. Damit kann auf einfache Weise und ohne signifikante Einschränkung des Nutzerkomforts häufig überprüft werden, ob eine berechtigte Nutzung der Fahrradkomponenten und des Fahrzeugsystems vorliegt. Damit kann auf besonders einfache und effektive Weise ein hoher Diebstahlschutz bereitgestellt werden.

Weiter bevorzugt umfasst das Verfahren ferner die Schritte: Erfassen einer Aktivierungsinformation, und Freigeben des Betriebsstarts des Fahrzeugsystems nur im Ansprechen auf das erfolgte Erfassen der Aktivierungsinformation. Dabei wird die Aktivierungsinformation im Ansprechen auf einen verbundenen Zustand einer vordefinierten Fahrradkomponente mit dem Fahrzeugsystem erzeugt. Als vordefinierte Fahrradkomponente kann beispielsweise ein Schlüsselgerät angesehen werden, welches beispielsweise einen bestimmen Aktivierungsschlüssel aufweist, der den Betriebsstart initiieren kann. Beispielsweise kann ein Ein- und/oder Ausgabegerät, wie beispielsweise ein Fahrradcomputer und/oder ein Display, als die vordefinierte Fahrradkomponente, das heißt als das Schlüsselgerät, angesehen werden. Wenn der Nutzer des Elektrofahrrads diese Fahrradkomponente beispielsweise mechanisch und/oder elektrisch mit dem Fahrzeugsystem verbindet, wird damit unmittelbar, beispielsweise durch die Komponentensteuereinheit, die Aktivierungsinformation erzeugt. Das Erfassen der Aktivierungsinformation erfolgt vorzugsweise durch die zentrale Steuereinheit. Damit kann auf besonders einfache und nutzerfreundliche Weise ein zuverlässiger sowie sicherer Betriebsstart des Fahrzeugsystems bereitgestellt werden. Alternativ oder zusätzlich bevorzugt wird die Aktivierungsinformation mittels eines Nutzergeräts erzeugt. Als Nutzergerät kann beispielsweise ein Smartphone des Nutzers angesehen werden. Beispielsweise kann in diesem Fall die Aktivierungsinformation erzeugt werden, wenn eine Kopplung des Nutzergeräts, insbesondere mittels einer Drahtlosverbindung, mit dem Fahrzeugsystem erfolgt. Alternativ oder zusätzlich bevorzugt kann die Aktivierungsinformation durch eine manuelle Nutzereingabe des Nutzers mittels des Nutzergeräts erzeugt werden.

Bevorzugt umfasst das Verfahren ferner den Schritt: Sperren des Fahrzeugsystems und/oder sämtlicher Fahrradkomponenten bei jedem Betriebsende des Fahrzeugsystems. Als Betriebsende wird insbesondere ein Abschalten bzw. Deaktivieren des Fahrzeugsystems angesehen. Insbesondere erfolgt das Sperren des Fahrzeugsystems durch die zentrale Steuereinheit. Bevorzugt erfolgt das Sperren der Fahrradkomponenten durch die jeweilige Komponentensteuereinheit und/oder durch die zentrale Steuereinheit. Das heißt, nach jedem Betriebsende des Fahrzeugsystems wird automatisch und gezielt gesteuert ein Sperrvorgang für das Fahrzeugsystem und/oder sämtliche Fahrradkomponenten ausgeführt. Somit kann bei einem unerlaubten Entwenden einer der Fahrradkomponenten im ausgeschalteten Zustand des Fahrzeugsystems sichergestellt werden, dass diese Fahrradkomponente sich im gesperrten Zustand befindet, wodurch insbesondere eine Verwendung in einem anderen Fahrradsystem verhindert werden kann, und somit ein Diebstahlschutz erhöht werden kann.

Vorzugsweise umfasst das Verfahren ferner den Schritt: Initiales Erzeugen der Schlüsselinformationen basierend auf Identifikationsmerkmalen des Fahrzeugsystems und der Fahrradkomponenten, vorzugsweise durch ein externes Anbietersystem. Als externes Anbietersystem kann beispielsweise ein Server oder dergleichen angesehen werden, mit welchem insbesondere die zentrale Steuereinheit über das Internet kommunizieren kann. Als Identifikationsmerkmale können insbesondere vordefinierte individuelle, beispielsweise gespeicherte, Daten, wie insbesondere eine Seriennummer, angesehen werden, welche das Fahrzeugsystem beziehungsweise jede der Fahrradkomponenten eindeutig identifizieren. Bevorzugt erfolgt das initiale Erzeugen der Schlüsselinformationen bei einer erstmaligen Inbetriebnahme des Fahrzeugsystems. Zudem bevorzugt kann das Erzeugen der Schlüsselinformationen erneut in regelmäßigen Zeitabständen erfolgen. Das heißt, beispielsweise können die Schlüsselinformationen eine zeitlich begrenzte Gültigkeit aufweisen, wodurch diese regelmäßig neu erzeugt werden müssen. Damit kann ein besonders diebstahlsicherer Betrieb des Fahrzeugsystems ermöglicht werden.

Vorzugsweise umfasst das initiale Erzeugen der Schlüsselinformationen zusätzlich eine Nutzeridentifikation. Besonders bevorzugt werden die Schlüsselinformationen in Abhängigkeit der Nutzeridentifikation erzeugt. Das heißt, beispielsweise kann dem Eigentümer des Elektrofahrrads oder der Fahrradkomponenten eine vorbestimmte Rolle als Eigentümer zugewiesen werden. Vorzugsweise kann dabei bei jedem Betriebsstart des Fahrzeugsystems die Rolle des jeweiligen Nutzers für jede der Fahrradkomponenten überprüft werden. Dabei erfolgt besonders bevorzugt das Freigeben des Fahrzeugsystems und der Fahrradkomponenten ausschließlich dann, wenn der momentane Nutzer für das Fahrzeugsystem sowie für jede der Fahrradkomponenten als Eigentümer erkannt wird. Damit kann besonders zuverlässig und mit hohem Diebstahlschutz der Betrieb des Elektrofahrrads ermöglicht werden.

Weiter bevorzugt umfasst das Verfahren ferner eine Aktivierung und/oder eine Deaktivierung des Verfahrens im Ansprechen auf eine Nutzereingabe, und vorzugsweise zusätzlich durch einen Befehl eines externen Anbietersystems. Das heißt, als Deaktivierung des Verfahrens kann angesehen werden, dass der Betrieb des Fahrzeugsystems und der Fahrradkomponenten ohne Überprüfung der Kompatibilität möglich ist. Dadurch können beispielsweise mehrere Nutzer das Elektrofahrrad ohne Nutzeridentifizierung verwenden. Zudem kann gezielt ein Austausch von Fahrradkomponenten durch den Nutzer oder beispielsweise einen autorisierten Händler oder eine Werkstatt ermöglicht werden. Insbesondere erfolgt das Deaktivieren dabei nur, wenn das externe Anbietersystem die Berechtigung des Nutzers, der die Nutzereingabe tätigt, verifiziert.

Besonders bevorzugt umfasst das Verfahren ferner den Schritt: Identifizieren eines Nutzers. Das Verfahren und/oder die Aktivierung und/oder die Deaktivierung des Verfahrens wird dabei in Abhängigkeit des Identifizierens des Nutzers durchgeführt. Das Identifizieren des Nutzers kann beispielsweise das Zuweisen einer Rolle des Nutzers als Eigentümer umfassen. Dabei kann das Verfahren oder Teilschritte des Verfahrens nur durchgeführt werden, wenn eine entsprechende Verifizierung der Rolle des Nutzers positiv erfolgt. Damit kann ein einfacher und zuverlässiger Betrieb des Elektrofahrrads mit besonders hohem Diebstahlschutz ermöglicht werden.

Bevorzugt umfassen die Fahrradkomponenten zumindest eine Antriebseinheit und/oder eine Batterie und/oder eine Ausgabeeinheit und/oder eine Eingabeeinheit. Insbesondere ist die Batterie als elektrischer Energiespeicher zur elektrischen Energieversorgung der Antriebseinheit des Elektrofahrrads vorgesehen. Die Ausgabeeinheit kann beispielsweise ein Display zur Darstellung von Informationen umfassen. Die Eingabeeinheit kann beispielsweise Bedienelemente, wie einen Touchscreen und/oder einen Taster zur manuellen Eingabe von Nutzerbefehlen, umfassen.

Bevorzugt umfasst das Verfahren ferner den Schritt: Deaktivieren der Batterie des Elektrofahrrads durch das externe Anbietersystem und mittels Übertragen eines Konfigurationscontainers. Insbesondere wird als Konfigurationscontainer eine Mehrzahl an vorbestimmten Daten angesehen, welche das Deaktivieren der Batterie gezielt bewirken können. Das Deaktivieren mittels des Konfigurationscontainers wird bevorzugt durchgeführt, wenn ein Defekt der Batterie erkannt wurde. Beispielsweise kann ein derartiger Defekt sensorbasiert von dem Elektrofahrrad und/oder dem Fahrzeugsystem oder dergleichen erkannt werden. Durch das Deaktivieren der Batterie mittels Konfigurationscontainer kann dabei eine besonders manipulationssichere und zuverlässige Deaktivierung der Batterie ermöglicht werden. Insbesondere kann dadurch verhindert werden, dass nach der Deaktivierung ein unbefugtes erneutes Aktivieren der Batterie möglich ist.

Dadurch können bei defekten Batterien eine besonders zuverlässige und betriebssichere Stilllegung der Batterie ermöglicht werden. Bevorzugt erfolgt das Deaktivieren der Batterie dabei derart, dass eine Bereitstellung eines Versorgungsstroms der Batterie an die Antriebseinheit des Elektrofahrrads gezielt verhindert wird. Vorzugsweise kann das Deaktivieren der Batterie derart erfolgen, dass nach Deaktivierung von der Batterie weiterhin Informationen, beispielsweise über einen Zustand und/oder von Identifikationsparametern der Batterie möglich ist. Dadurch kann auch nach Deaktivierung noch eine Kommunikation und beispielsweise Überprüfung der Batterie erfolgen.

Besonders bevorzugt umfasst der Konfigurationscontainer Deaktivierungsdaten und Signaturdaten. Insbesondere sind die Deaktivierungsdaten eingerichtet, um die Deaktivierung der Batterie gezielt zu bewirken, beispielsweise im Ansprechen auf einen Empfang der Deaktivierungsdaten durch die Komponentensteuereinheit der Batterie. Insbesondere umfassen die Signaturdaten eine vordefinierte individuelle und manipulationssichere Signatur, welche vorzugsweise ausschließlich für genau einen Deaktivierungsvorgang für genau eine Batterie vorgesehen sind. Das heißt, insbesondere wird der Konfigurationscontainer individuell und gezielt für die Deaktivierung von genau einer spezifischen Batterie verwendet. Dadurch kann ein besonders sicheres und gezieltes Deaktivieren der Batterie bei erkanntem Defekt bewirkt werden.

Weiter bevorzugt umfasst das Verfahren ferner den Schritt: Übermitteln einer Deaktivierungsinformation von der Batterie, insbesondere von der Komponentensteuereinheit der Batterie, vorzugsweise über die zentrale Steuereinheit, an das externe Anbietersystem im Ansprechen auf das erfolgte Deaktivieren der Batterie. Insbesondere umfasst die Deaktivierungsinformation dabei Signaturdaten. Als Signaturdaten werden dabei insbesondere analog der Signaturdaten des Manipulationscontainers individuelle spezifische manipulationssichere Informationen über die deaktivierte Batterie angesehen. Das heißt, nach erfolgter Deaktivierung der Batterie wird diese Deaktivierung gezielt und manipulationssicher mittels der Deaktivierungsinformation an das externe Anbietersystem zurückgemeldet. Dadurch kann beispielsweise einer Verwendung der Batterie in anderen Elektrofahrrädern, insbesondere, wenn diese mit dem externen Anbietersystem kommunizieren können, gezielt und zuverlässig verhindert werden. Ferner kann die erfolgreiche Deaktivierung gezielt und zuverlässig von dem externen Anbietersystem verifiziert werden.

Vorzugsweise wird der Konfigurationscontainer von dem externen Anbietersystem basierend auf Identifikationsparametern der Batterie erzeugt. Insbesondere werden die Identifikationsparameter dabei zuerst an das externe Anbietersystem übermittelt, wobei dieses anschließend den Konfigurationscontainer entsprechend erzeugt. Dadurch kann das Deaktivieren der Batterie besonders gezielt und manipulationssicher erfolgen.

Weiterhin führt die Erfindung zu einem Elektrofahrrad, umfassend ein Fahrzeugsystem mit einer zentralen Steuereinheit und mit mehreren Fahrradkomponenten. Jede der Fahrradkomponenten umfasst dabei eine separate Komponentensteuereinheit. Das Fahrzeugsystem ist dabei eingerichtet zur Durchführung des beschriebenen Verfahrens.

### Kurze Beschreibung der Zeichnungen

Nachfolgend wird ein Ausführungsbeispiel der Erfindung unter Bezugnahme auf die begleitenden Zeichnungen im Detail beschrieben. In der Zeichnung ist:
- Figur 1: eine vereinfachte schematische Ansicht eines Elektrofahrrads, bei dem ein Verfahren zum Betreiben des Elektrofahrrads gemäß einem bevorzugten Ausführungsbeispiel der Erfindung durchgeführt wird,
- Figur 2: eine stark vereinfachte schematische Ansicht des erfindungsgemäßen Verfahrens, und
- Figur 3: eine stark vereinfachte schematische Ansicht einer Erweiterung des erfindungsgemäßen Verfahrens.

### Ausführungsformen der Erfindung

Bevorzugt sind alle gleichen Bauteile, Elemente und/oder Einheiten in allen Figuren mit den gleichen Bezugszeichen versehen.

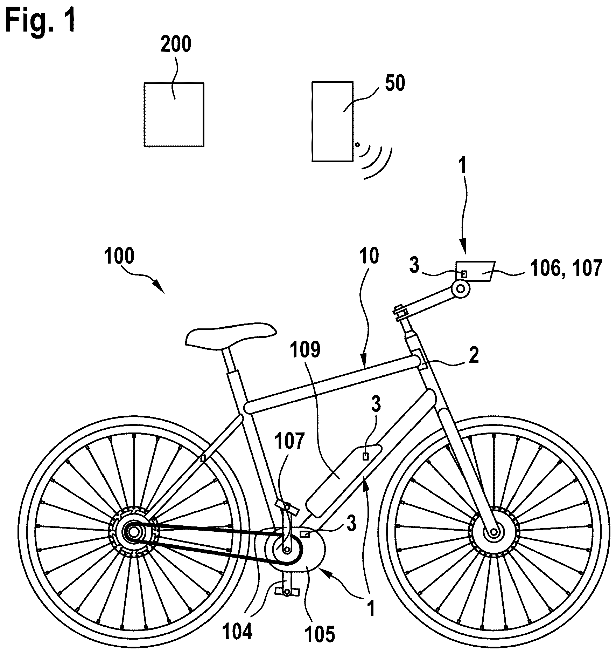

Figur 1 zeigt eine vereinfachte schematische Ansicht eines Elektrofahrrads 100, bei dem ein Verfahren 20 zum Betreiben des Elektrofahrrads 100 gemäß einem bevorzugten Ausführungsbeispiel der Erfindung durchgeführt wird.

Das Elektrofahrrad 100 umfasst eine Antriebseinheit 105 mit einem Motor, der insbesondere ein Elektromotor ist. Der Motor kann mittels einer Batterie 109, welche einen elektrischen Energiespeicher des Elektrofahrrads 100 bildet, mit elektrischer Energie versorgt werden.

Die Antriebseinheit 105 ist im Bereich eines Tretlagers des Elektrofahrrads 100 angeordnet. Durch ein mittels des Motors der Antriebseinheit 105 erzeugten Motormoments kann eine durch Muskelkraft erzeugte Tretkraft eines Fahrers des Elektrofahrrads 100 motorisch unterstützt werden. Die Muskelkraft des Fahrers kann dabei über einen Kurbeltrieb mit Kurbeln 104 aufgebracht werden.

Die Antriebseinheit 105 umfasst ferner eine Steuereinheit 2, welche eingerichtet ist, um den Motor der Antriebseinheit 105 gesteuert zu betätigen. Beispielsweise kann die Steuereinheit 2 einen elektrischen Betätigungsstrom zum Betätigen des Motors steuern.

Das Elektrofahrrad 100 umfasst ein Fahrzeugsystem 10, welches einen Betrieb des Elektrofahrrads 100 ermöglicht. Das Fahrzeugsystem 10 umfasst mehrere Fahrradkomponenten 1. Als Fahrradkomponenten 1 sind dabei in dem bevorzugten Ausführungsbeispiel zumindest die Antriebseinheit 105, die Batterie 109, sowie eine Ausgabeeinheit 106 und eine Eingabeeinheit 107 vorgesehen.

Ausgabeeinheit 106 und Eingabeeinheit 107 sind beispielhaft in ein gemeinsames Gerät, welches auch als Benutzerschnittstelle bezeichnet werden kann, integriert, und welches an einem Lenker des Elektrofahrrads 100 angeordnet ist. Beispielsweise umfasst dieses Gerät einen Touchscreen zur Ausgabe von Informationen, sowie um manuelle Nutzereingaben durch den Nutzer zu ermöglichen.

Jede Fahrradkomponente 1 weist dabei eine Komponentensteuereinheit 3 auf, welche beispielsweise als ein Mikrocontroller ausgebildet ist.

Zudem umfasst das Fahrzeugsystem 10 eine zentrale Steuereinheit 2. Die zentrale Steuereinheit 2 ist beispielhaft an einem Fahrradrahmen des Elektrofahrrads 105 angeordnet. Alternativ bevorzugt kann die zentrale Steuereinheit 2 auch in eine der Fahrradkomponenten 1 integriert sein, wie beispielsweise in die Antriebseinheit 105. Weiter alternativ bevorzugt kann eine der Komponentensteuereinheiten 3 zugleich die zentrale Steuereinheit 2 bilden.

Das Fahrzeugsystem 10 kann mit einem externen Anbietersystem 200, vorzugsweise über die zentrale Steuereinheit 2, über eine Internetverbindung kommunizieren. Das zentrale Anbietersystem 200 kann beispielsweise ein Server sein, mittels welchem eine Datenverarbeitung und -verwaltung erfolgen kann.

Ferner kann das Fahrzeugsystem 10 mit einem Nutzergerät 50, beispielsweise mittels einer Drahtlosverbindung, kommunizieren. Mittels des Nutzergeräts 50 kann der Nutzer manuelle Eingaben tätigen, mittels welchen Funktionen des Fahrzeugsystems 10 und/oder des Elektrofahrrads 100 betätigt werden können. Weiterhin können mittels des Nutzergeräts 50 Informationen ausgegeben werden.

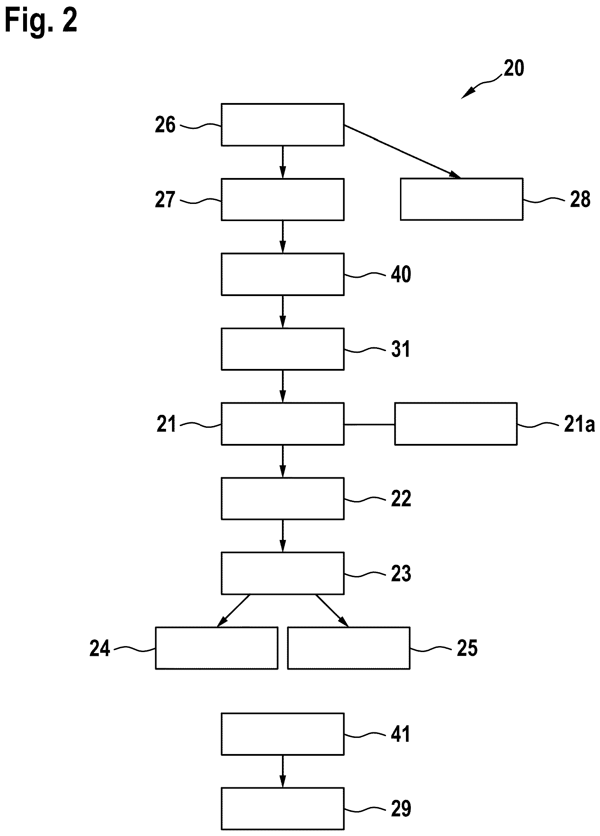

Mittels des erfindungsgemäßen Verfahrens 20, welches von dem Fahrzeugsystem 10 des Elektrofahrrads 100 ausgeführt werden kann, kann ein besonders hoher Diebstahlschutz für das Elektrofahrrad 100 sowie für die Fahrradkomponenten 1 bereitgestellt werden, wie nachfolgend im Detail in Bezug auf die Figur 2 beschrieben.

Bei dem Verfahren 20 erfolgt zunächst ein Erfassen 26 einer Aktivierungsinformation.

Die Aktivierungsinformation wird dabei dadurch erzeugt, dass eine vordefinierte Fahrradkomponente 1, wie vorzugsweise die Ausgabeeinheit 106 und Eingabeeinheit 107 mit dem Fahrzeugsystem 10 verbunden wird. Beispielsweise kann hierfür der Nutzer das Gerät mit der Ausgabeeinheit 106 und Eingabeeinheit 107 mit einer entsprechenden Schnittstelle mit dem Elektrofahrrad 100 verbinden.

Alternativ oder zusätzlich bevorzugt kann die Aktivierungsinformation mittels des Nutzergeräts 50 erzeugt werden. Dabei kann in einer ersten Variante die Aktivierungsinformation automatisch erzeugt werden, wenn sich das Nutzergerät 50 in der Nähe des Elektrofahrrads 100 befindet, beispielsweise mittels der Drahtlosverbindung gekoppelt wird. Alternativ bevorzugt kann die Aktivierungsinformation durch eine manuelle Nutzereingabe des Nutzers mittels des Nutzergeräts 50 erzeugt werden.

Die Aktivierungsinformation wird vorzugsweise durch die zentrale Steuereinheit 2 erfasst. Anschließend erfolgt ein Freigeben 27 eines Betriebsstarts 40 des Fahrzeugsystems 10. Das Freigeben 27 des Betriebsstarts 40 erfolgt dabei ausschließlich, wenn zuvor die Aktivierungsinformation erfasst wurde. Falls keine Aktivierungsinformation erfasst wird, erfolgt ein Sperren 28 des Betriebsstarts 40.

Bei freigegebenem Betriebsstart 40 kann der Betriebsstart 40 anschließend initiiert werden, beispielsweise durch eine weitere Nutzereingabe des Nutzers und/oder automatisch durch die zentrale Steuereinheit 2. Dabei können beim Betriebsstart 40 sämtliche Systeme und Fahrradkomponenten 11 des Elektrofahrrads 100 in einen betriebsbereiten Zustand versetzt werden.

Anschließend erfolgt ein Identifizieren 31 des Nutzers des Elektrofahrrads 100. Vorzugsweise kann das Identifizieren 31 anhand des Nutzergeräts 50 erfolgen. Das Identifizieren 31 umfasst insbesondere ein Überprüfen, ob der momentane Nutzer des Elektrofahrrads 100 Eigentümer des Elektrofahrrads 100 sowie sämtlicher Fahrradkomponenten 1, die momentan mit dem Fahrzeugsystem 10 verbunden sind, ist. Mit anderen Worten erfolgt eine Überprüfung der Rolle des momentanen Nutzers.

Bei positiver Überprüfung der Rolle des Nutzers und erkannter Berechtigung des Nutzers erfolgt bei dem Verfahren 20 anschließend ein Erkennen 21 eines Verbindungszustands der Fahrradkomponenten 1 mit dem Fahrzeugsystem 10.

Das Erkennen 21 des Verbindungszustands umfasst dabei insbesondere ein Erkennen eines verbundenen oder unverbundenen Zustands der Fahrradkomponenten 1 mittels mechanischer und/oder elektrischer Schnittstellen mit dem Fahrzeugsystem 10.

Im Falle von erkannten unverbundenen Fahrradkomponenten 1 kann ein gezieltes gesteuertes Sperren 21a dieser unverbundenen Fahrradkomponenten 1 erfolgen.

Bei erkanntem verbundenen Zustand erfolgt weiterhin ein Austauschen 22 von Schlüsselinformationen zwischen den Fahrradkomponenten 1 und dem Fahrzeugsystem 10. Als Schlüsselinformationen werden dabei individuelle, das Fahrzeugsystem 10 und jede Fahrradkomponente 1 kennzeichnende Daten ausgetauscht.

Vorzugsweise können die Schlüsselinformationen Identifikationsmerkmale des Nutzers und/oder des Eigentümers des Elektrofahrrads 100 und/oder der jeweiligen Fahrradkomponente 1 umfassen. Ferner können die Schlüsselinformationen Informationen über einen gesperrten oder freigegebenen Zustand der jeweiligen Fahrradkomponente 1 umfassen.

Anschließend erfolgt ein Überprüfen 23 von Kompatibilitäten der ausgetauschten Schlüsselinformationen jeweils durch die zentrale Steuereinheit 2 und durch die Komponentensteuereinheiten 3. Insbesondere kann dabei die Kompatibilität der Rolleninformationen des aktuellen Nutzers des Elektrofahrrads 100 sowie der jeweiligen Fahrradkomponenten 1 überprüft werden. Das heißt, es kann überprüft werden, ob der momentane Nutzer des Elektrofahrrads 100 Eigentümer des Elektrofahrrads 100 sowie von sämtlichen Fahrradkomponenten 1 ist.

In Abhängigkeit der ermittelten Kompatibilität der ausgetauschten Schlüsselinformationen erfolgt anschließend ein Sperren 24 oder Freigeben 25 des gesamten Fahrzeugsystems. Im Detail erfolgt dabei das Sperren 24 des Fahrzeugsystems 10, wenn zumindest eine Inkompatibilität von zumindest einer Fahrradkomponente 1 erkannt wird.

Das Sperren 24 erfolgt dabei derart, dass ein gezieltes gesteuertes Verhindern eines Betriebs der Antriebseinheit 105 des Elektrofahrrads, insbesondere durch die zentrale Steuereinheit 2 und/oder durch die Komponentensteuereinheit 3 der Antriebseinheit 105, erfolgt. Hierbei wird vorzugsweise gezielt verhindert, dass die Antriebseinheit 105 durch einen elektrischen Strom von der Batterie 109 versorgt werden kann. Beispielsweise können die weiteren Fahrradkomponenten 1 dabei grundsätzlich zumindest teilweise betriebsbereit gehalten werden, beispielsweise um Informationen übermitteln zu können.

Sofern eine vollständige Kompatibilität sämtlicher Schlüsselinformationen erkannt wurde, erfolgt das Freigeben 25 des Fahrradsystems 10. Hierbei werden sämtliche Systeme des Elektrofahrrads 100 in einen betriebsbereiten Zustand versetzt, und es können sämtliche Funktionen des Elektrofahrrads 100 zur Verfügung gestellt werden.

Weiterhin erfolgt bei dem Verfahren 20 nach jedem Betriebsende 41 des Fahrzeugsystems 10 ein Sperren 29 des Fahrzeugsystems und von sämtlichen Fahrradkomponenten 1. Das Betriebsende 41 kann beispielsweise durch eine manuelle Nutzereingabe des Nutzers initiiert werden. Alternativ oder zusätzlich bevorzugt kann das Betriebsende 41 automatisch herbeigeführt werden, beispielsweise durch die zentrale Steuereinheit 2, vorzugsweise nach Ablauf einer vorbestimmten Zeitspanne, wenn sich das Elektrofahrrad 100 im Stillstand befindet.

Das Verfahren 20 bietet somit den Vorteil, dass ein erhöhter Diebstahlschutz des Elektrofahrrads 100 und der Fahrradkomponenten 1 bereitgestellt werden kann. Wenn beispielsweise eine der Fahrradkomponenten 1 vom Elektrofahrrad 100 oder vom Fahrzeugsystem 10 entfernt, beispielsweise demontiert wird, so wird diese Fahrradkomponente 1 automatisch und unmittelbar gesperrt oder verbleibt im gesperrten Zustand, wenn diese bereits gesperrt ist.

Bei Montage oder Verbindung der gesperrten Fahrradkomponente 1 mit einem anderen Fahrzeugsystem 10 wird durch das spezielle Verfahren 20 dabei gezielt und besonders zuverlässig verhindert, dass die Fahrradkomponente 1 vom gesperrten in den freigegebenen Zustand versetzt werden kann. Das heißt, eine unberechtigte Nutzung der Fahrradkomponenten 1 kann auf einfache Weise und besonders zuverlässig und gezielt verhindert werden. Dadurch kann ein erhöhter Diebstahlschutz der Fahrradkomponenten 1 ermöglicht werden.

Vorzugsweise kann bei dem erfindungsgemäßen Verfahren ein initiales Erzeugen der Schlüsselinformationen, insbesondere vor einer erstmaligen Inbetriebnahme, basierend auf Identifikationsmerkmalen des Fahrzeugsystems 10 und der Fahrradkomponenten 1 durch das externe Anbietersystem 200 erfolgen. Insbesondere kann eine Überprüfung der Identifikationsmerkmale und eine Erzeugung der Schlüsselinformationen mittels asymmetrischer Kryptographie erfolgen.

Weiter bevorzugt können die Schlüsselinformationen jeweils über eine definierte Laufzeit verfügen. Das heißt, nach Ablauf der vordefinierten Laufzeit können diese nicht mehr von den gesperrten Fahrradkomponenten 1 und/oder der zentralen Steuereinheit 2 akzeptiert werden und müssen somit in regelmäßigen Abständen erneuert werden mittels des externen Anbietersystems 200.

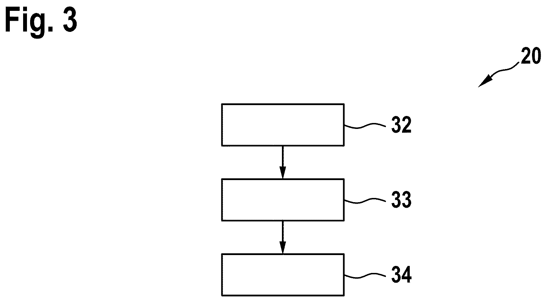

Figur 3 zeigt eine stark vereinfachte schematische Ansicht einer Erweiterung des erfindungsgemäßen Verfahrens 20. Insbesondere können die in Figur 3 dargestellten Verfahrensschritte alternativ oder zusätzlich zu dem in Figur 2 dargestellten Verfahren 20 ausgeführt werden.

Die Erweiterung des Verfahrens 20 umfasst ein Deaktivieren 33 der Batterie 109 des Elektrofahrrads 100.

Insbesondere erfolgt das Deaktivieren 33 nach einem Erkennen 32 eines Defekts der Batterie 109. Das Erkennen 32 des Defekts kann beispielsweise sensorbasiert, insbesondere basierend auf Eigenschaften und/oder Betriebsparametern der Batterie 109 erfolgen.

Das Deaktivieren 33 wird dabei durchgeführt, um weitergehende Schäden oder Gefährdungen durch die defekte Batterie 109 zu vermeiden.

Das Deaktivieren 33 der Batterie 109 erfolgt dabei durch das externe Anbietersystem 200 und mittels eines Übermittelns eines Konfigurationscontainers.

Der Konfigurationscontainer umfasst dabei Deaktivierungsdaten, welche beim Übermitteln an die Batterie 109, insbesondere an die Komponentensteuereinheit 3 der Batterie 109, bewirken, dass die Batterie 109 dauerhaft deaktiviert wird.

Zudem umfasst der Konfigurationscontainer Signaturdaten, welche eindeutig individuell, und insbesondere kryptographisch geschützt, ausgebildet sind. Diese Signaturdaten gewährleisten die Integrität und Authentizität der Daten, wodurch eine Manipulation der Deaktivierung erschwert werden kann. Das heißt, einerseits kann das Deaktivieren 33 der Batterie 109 nur dann erfolgen, wenn die Signaturdaten des Konfigurationscontainers durch die Komponentensteuereinheit 3 und/oder durch die zentrale Steuereinheit 2 entsprechend verifiziert werden. Zudem können die Signaturdaten bewirken, dass ein Wiederaktivieren der Batterie 109 nach dem Deaktivieren 33 zuverlässig verhindert werden kann. So kann beispielsweise ein Aktivierungsbefehl nach dem Deaktivieren 33 ohne entsprechende Signaturdaten verhindert werden.

Nach dem Deaktivieren 33 erfolgt zudem ein Übermitteln 34 einer Deaktivierungsinformation von der Batterie 109, insbesondere von der Komponentensteuereinheit 3 der Batterie 109, an das externe Anbietersystem 200. Die Deaktivierungsinformation umfasst dabei vorzugsweise ebenfalls Signaturdaten, um das erfolgreiche Deaktivieren 33 eindeutig und gesichert zu übermitteln.

## Patentansprüche

1. Verfahren zum Betreiben eines Elektrofahrrads (100), welches ein Fahrzeugsystem (10) mit einer zentralen Steuereinheit (2) und mit mehreren Fahrradkomponenten (1) umfasst, wobei jede Fahrradkomponente (1) eine Komponentensteuereinheit (3) umfasst, und wobei das Verfahren (20) die Schritte umfasst:
- Erkennen (21) eines Verbindungszustands der Fahrradkomponenten (1) mit dem Fahrzeugsystem (10),
- Austauschen (22) von Schlüsselinformationen zwischen den Fahrradkomponenten (1) und dem Fahrzeugsystem (10) im erkannten verbundenen Zustand,
- Überprüfen (23) von Kompatibilitäten der ausgetauschten Schlüsselinformationen durch die zentrale Steuereinheit (2) und durch die Komponentensteuereinheiten (3), und
- Sperren (24) oder Freigeben (25) des Fahrzeugsystems (10) im Ansprechen auf ein Erkennen von zumindest einer Inkompatibilität der ausgetauschten Schlüsselinformationen.

2. Verfahren nach Anspruch 1, ferner umfassend den Schritt:
- Sperren (21a) einer Fahrradkomponente (1) im Ansprechen auf ein Erkennen eines unverbundenen Zustands dieser Fahrradkomponente (1), insbesondere durch die Komponentensteuereinheit (3).

3. Verfahren nach einem der vorhergehenden Ansprüche,
- wobei das Sperren (24) des Fahrzeugsystems (10) ein gesteuertes Verhindern eines Betriebs einer Antriebseinheit (105) des Elektrofahrrads (100) umfasst, und/oder
- wobei das Freigeben (25) des Fahrzeugsystems (10) ein gesteuertes Versetzen Antriebseinheit (105) des Elektrofahrrads (100), und insbesondere sämtlicher Fahrradkomponenten (1), in einen betriebsbereiten Zustand umfasst.

4. Verfahren nach einem der vorhergehenden Ansprüche, wobei das Verfahren (20) bei jedem Betriebsstart (40) des Fahrzeugsystems (10) durchgeführt wird.

5. Verfahren nach Anspruch 4, ferner umfassend die Schritte:
- Erfassen (26) einer Aktivierungsinformation, und
- Freigeben (27) des Betriebsstarts (40) des Fahrzeugsystems (10) nur im Ansprechen auf das erfolgte Erfassen (26) der Aktivierungsinformation,
- wobei die Aktivierungsinformation im Ansprechen auf einen verbundenen Zustand einer vordefinierten Fahrradkomponente (1) mit dem Fahrzeugsystem (10) erzeugt wird, und/oder
- wobei die Aktivierungsinformation mittels eines Nutzergeräts erzeugbar ist.

6. Verfahren nach einem der vorhergehenden Ansprüche, ferner umfassend den Schritt:
- Sperren (29) des Fahrzeugsystems (10) und/oder sämtlicher Fahrradkomponenten (1) bei jedem Betriebsende (41) des Fahrzeugsystems (10).

7. Verfahren nach einem der vorhergehenden Ansprüche, ferner umfassend den Schritt:
- Initiales Erzeugen der Schlüsselinformationen basierend auf Identifikationsmerkmalen des Fahrzeugsystems (10) und der Fahrradkomponenten (1), vorzugsweise durch ein externes Anbietersystem (200).

8. Verfahren nach Anspruch 7, ferner umfassend eine Aktivierung und/oder Deaktivierung des Verfahrens (20) im Ansprechen auf eine Nutzereingabe, und vorzugsweise zusätzlich durch ein externes Anbietersystem (200).

9. Verfahren nach einem der vorhergehenden Ansprüche, ferner umfassend den Schritt:
- Identifizieren (31) eines Nutzers,
- wobei das Verfahren (20) und/oder die Aktivierung und/oder Deaktivierung des Verfahrens (20) in Abhängigkeit des Identifizierens (31) des Nutzers durchgeführt wird.

10. Verfahren nach einem der vorhergehenden Ansprüche, wobei die Fahrradkomponenten (1) zumindest eine Antriebseinheit (105) und/oder eine Batterie (109) und/oder eine Ausgabeeinheit (106) und/oder eine Eingabeeinheit (107) umfassen.

11. Verfahren nach einem der vorhergehenden Ansprüche, ferner umfassend den Schritt:
- Deaktivieren (33) der Batterie (109) des Elektrofahrrads (100) durch das externe Anbietersystem (200) und mittels Übermitteln eines Konfigurationscontainers.

12. Verfahren nach Anspruch 11, wobei der Konfigurationscontainer Deaktivierungsdaten und Signaturdaten umfasst.

13. Verfahren nach einem der Ansprüche 11 oder 12, ferner umfassend den Schritt:
- Übermitteln (34) einer Deaktivierungsinformation von der Batterie (109) an das externe Anbietersystem (200) im Ansprechen auf das erfolgte Deaktivieren (33) der Batterie (109), insbesondere wobei die Deaktivierungsinformation Signaturdaten umfasst.

14. Verfahren nach einem der Ansprüche 11 bis 13, wobei der Konfigurationscontainer basierend auf Identifikationsparametern der Batterie (109) von dem externen Anbietersystem (200) erzeugt wird.

15. Elektrofahrrad, umfassend ein Fahrzeugsystem (10) mit einer zentralen Steuereinheit (2) und mit mehreren Fahrradkomponenten (1) umfasst, wobei jede Fahrradkomponente (1) eine Komponentensteuereinheit (3) umfasst, und wobei das Fahrzeugsystem (10) eingerichtet ist zur Durchführung eines Verfahrens (20) nach einem der vorhergehenden Ansprüche.
